# EUROPEAN PATENT SPECIFICATION

(11) **EP 1 809 684 B1**
(45) Date of publication and mention of the grant of the patent: **05.03.2008**
(21) Application number: 05796930.5
(22) Date of filing: 17.10.2005
(51) Int. Cl.: C08G 63/08, C08G 63/664, C08G 63/685, C08G 63/91, C08G 63/78

(54) **METHODS OF PRODUCING AMINE-TERMINATED CAPROLACTONE POLYMERS AND USES OF THE PRODUCED POLYMERS**
VERFAHREN ZUR HERSTELLUNG VON AMINTERMINIERTEN CAPROLACTONPOLYMEREN UND VERWENDUNG DER HERGESTELLTEN POLYMERE
PROCEDES DE FABRICATION DE POLYMERES DE CAPROLACTONE A TERMINAISON AMINE ET UTILISATION DES POLYMERES AINSI FABRIQUES

(30) Priority: 15.10.2004 EP 04105098
(43) Date of publication of application: 25.07.2007
(73) Proprietor: SOLVAY (Société Anonyme), 1050 Bruxelles (BE)
(72) Inventor: CARR, Graham, LIVERPOOL Merseyside L25 5HR (GB); WASSON, Robert, WIRRALL L660 2TB (GB); DERBYSHIRE, Stewart, CHESTER Cheshire CH3 5XQ (GB)
(74) Representative: Vande Gucht, Anne
(86) International application number: PCT/EP2005/055306
(87) International publication number: WO 2006/040355

(56) References cited:
- US-A- 5 525 683
- PATENT ABSTRACTS OF JAPAN vol. 012, no. 426 (C-542), 10 November 1988 (1988-11-10) & JP 63 154735 A (DAICEL CHEM IND LTD), 28 June 1988 (1988-06-28)
- S. STASSEN, S. ARCHAMBEAU, PH. DUBOIS,* R. JEROME, AND PH. TEYSSIE: "Macromolecular Engineering of Polylactones and Polylactides. XVI. On the Way to the Synthesis of w-Aliphatic Primary Amine Poly (c-caprolactone) and Polylactides" JOURNAL OF POLYMER SCIENCE PART A POLYMER CHEMISTRY, vol. 32, 1994, pages 2443-2455, XP002321541
- YING SONG, LIJIAN LIU, XIAOCHENG WENG AND RENXI ZHUO: "Acid-initiated polymerization of epsilon-caprolactone under microwave irradiation and its application in the preparation of drug controlled release system" JOURNAL OF BIOMATERIAL SCIENCE POLYMER EDITION, vol. 14, no. 3, 2003, pages 241-253, XP009045394

## Description

### FIELD OF THE INVENTION

The present invention provides a method of producing amine-terminated caprolactone polymers. The polymers produced by the method of the present invention have a number of potential applications.

### BACKGROUND OF THE INVENTION

Amine-terminated polyethers are used as epoxy curing agents in the field of polymer chemistry. In addition, the reaction of amine-terminated polyethers with isocyanates to produce polyurea is an example of the commercial importance of amine-terminated polyethers.

Although amine-terminated polyethers have numerous applications, they are known to have very poor outdoor weatherability due to the ether linkages in the polymer backbone.

There is therefore a need for an alternative polymer with amine functionality which is less vulnerable to UV and/or oxidative attack that can be used as a replacement to amine-terminated polyethers.

Amine-terminated caprolactone polymers with their ester linkages provide such an alternative due to their comparatively more stable nature. However, although there are a number of known methods for producing caprolactone polymers having a single primary amine group present at a terminal end thereof, there are very few known methods of reliably producing caprolactone polymers having at least two terminal primary amine groups, and thus the use of amine-terminated polyethers is still preferred.

A reaction method to produce a lactone polymer having two terminal primary amine groups is discussed in the Abstract of Japanese Patent Number 63154735.

Such Patent Abstract discloses a three stage reaction process, wherein : 1) the raw material lactone polymer is obtained by ring opening polymerisation of epsilon-caprolactone monomer in the presence of an active hydrogen-containing initiator and a catalyst; 2) the resulting lactone polymer, having either a hydroxyl group on both of its terminals or a hydroxyl group on one terminal and a carboxyl group on the other terminal, is reacted with acid anhydride to produce a lactone polymer with a carboxyl group on each of its terminals; 3) the lactone polymer dicarboxylic acid is then reacted with polyamine to produce the desired polymer.

The amine-terminated lactone polymer produced by the reaction method disclosed in the Japanese Patent Abstract has the following general formula:

H₂N-R'-NH-[C(=O)-R-C(=O)-NH-R']ₙ-NH₂ [1]

and where R is a polylactone
R' is an alkyl, aryl e.g. -(CH₂)₆

A more specific example of an amine-terminated polylactone produced by the above referenced method is:

H₂N-(CH₂)₆NH-[C(=O)-(CH₂)₂-C(=O)-O-R-O-C(=O)-(CH₂)₂-C(=O)-NH-(CH₂)₆]-NH₂ [2]

where R is a polylactone.

Alternative methods of producing amine-terminated polylactones are discussed in earlier publications such as Degee P. et al in Macromolecules(1992, pages 4242-4248). Another prior publication is Stassen S. et al in J. Polym. Sci.: Polym. Chem. (1994, pages 2443-2455). Another publication is Tian D. et al in Macromolecules (1994, pages 4134-4144). Also, Yuan M. et al in Macromolecules (2000, pages 1613-1617); Jeong J. H. et al in Polymer(2002 pages 583-591); and Lu F.-Z et al in Bioconjugate Chemistry(2002, pages 1159-1162).

US Patent No. 5525683A also discloses the preparation of amine-terminated polycaprolactone polymers using methane sulfonyl groups.

### SUMMARY OF THE INVENTION

The present invention provides a method of producing amine-terminated caprolactone polymers that have at least two terminal ends with a primary amine group thereon.

The method comprises the steps of: firstly using a polycarboxylic acid as an initiator in the ring opening polymerisation of epsilon-caprolactone to produce a polycaprolactone polymer having at least two terminal ends with a carboxylic acid located thereon; and secondly reacting the polymer produced by the first step of the method with a polyamine, at a temperature above 50°C, to produce an amine-terminated polycaprolactone polymer.

Although the reaction between the polycaprolactone polymer, having at least two terminal carboxylic acid groups, and a polyamine can occur effectively above 100°C, the preferable temperature at which the reaction takes place is below 80°C so as to prevent the reaction of the internal ester groups with the terminal primary amine groups.

Preferably the polyamine used in the second step of the above method is a diamine. However it is appreciated that some triamines and tetramines could also be effectively used. The polyamine used can be liquid, especially in the case of a diamine. An example of a liquid diamine is the commercial product ETHACURE^{®} 100.

Preferably the polycarboxylic acid used in the first step of the above method is a dicarboxylic acid. However it is appreciated that some tricarboxylic acids and tetracarboxylic acids could also be effectively used.

It is appreciated that the functionality of the amine-terminated caprolactone polymer produced by the method of the present invention may be controlled by varying the type of polycarboxylic acid used to open the epsilon-caprolactone ring.

Whilst it is appreciated that the method of the present invention is primarily concerned with the production of caprolactone polymers having two terminal ends with primary amine groups thereon, it is also appreciated that branched caprolactone polymers with more than two terminal ends having primary amine groups thereon can be produced. It is understood that the presence of additional terminal ends is determined by the type of polycarboxylic acid used as an initiator in the ring opening of epsilon-caprolactone. For example, the use of a tri carboxylic acid such as citric acid may be used to introduce a branching into the polymer produced by the splitting of epsilon-caprolactone.

A second embodiment of the present invention provides an amine-terminated caprolactone polymer that has at least two primary amine groups mounted on the terminal ends of the polymer, said polymer having the generic formula :

H₂N-(CH₂)₆-NH-CO-(CH₂)₅-O-[C(=O)-(CH₂)₅-O]ₙ-C(=O)-R₁-C(=O)-(CH₂)₅-C(=O)]ₘ-O-(CH₂)₅-CO-NH-(CH₂)₆-NH₂

where R₁ = (CH₂)pR₂; and

R₂ = CH₂ or CH-(CH₂)_{q}-C(=O)-[O-(CH₂)₅-C(=O)]ₛ-NH-(CH₂)₆-N-H₂ [3]

A third embodiment of the present invention provides uses of the amine-terminated caprolactone polymers of the present invention. One example of a use is as an epoxy resin curative.

Another application of the amine-terminated caprolactone polymers of the present invention is in the production of polyurea, where a reaction with isocyanate can produce a polyurea polymer.

### DETAILED DESCRIPTION OF THE INVENTION

As will be appreciated from the description of the invention thus far, the provided method of producing amine-terminated caprolactone polymers comprises two main stages.

The first reaction stage being the use of a polycarboxylic acid in the splitting of epsilon-caprolactone to produce a polycaprolactone polymer having at least two terminal ends with a carboxylic acid group located thereon. It will be appreciated that a separate catalyst, in the form of an organic acid, would usually be required to promote the splitting of the epsilon-caprolactone ring. However, in some circumstances the role of the catalyst may also be satisfied by the polycarboxylic acid - this appears to be the case with citric acid.

It is appreciated that the size (i.e. Molecular weight - MWt) of the carboxylic acid-terminated caprolactone produced by the first stage reaction is determined by the ratio of the polycarboxylic acid to the monomer. Variation of the catalyst used and other reaction conditions can be used to tailor the size of polymer produced. Examples of preferred ratios of Monomer/Initiator/Catalyst are: 4269g mono/731g adipic/5g catalyst for 1000MWt; and 4126g mono/373g adipic/5g catalyst for 2000MWt.

The second reaction stage, which results in the production of the desired amine-terminated caprolactone polymer, involves the reaction of a carboxylic acid-terminated caprolactone polymer with a polyamine at a temperature of 50°C or above. It is appreciated that the carboxylic acid-terminated caprolactone polymer used in the second stage reaction would be the product of the first reaction stage. However, it will be appreciated that the second reaction stage does not necessarily have to be carried out directly after the first reaction stage.

The reactions may be considered to progress as follows :

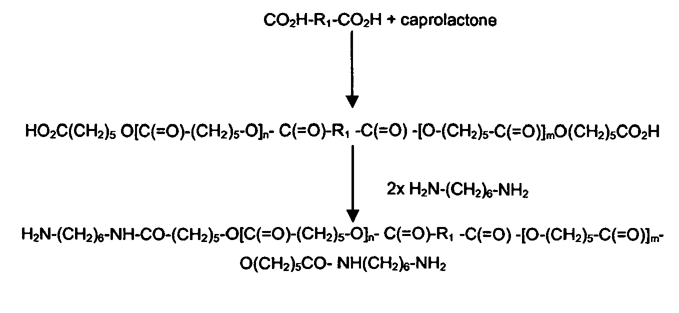

A wide range of polycarboxylic acids may be used in the first reaction stage, and it is appreciated that the type of acid used will determine the number of potential terminals on the final amine-terminated caprolactone polymer produced by the method of the present invention.

A preferred selection of polycarboxylic acids include, but are not limited to: adipic acid; succinic acid; dodecanedioic acid; and citric acid.

It is further appreciated that a wide range of polyamines can be effectively used in the second reaction stage. In this regard a preferred selection of polyamines include: Hexamethylenediamine (HMDA); ethylenediamine; N,N'-dimethylethyenediamine; piperazine and piperazine derivatives such as 2-methylpiperazine, 2,5-dimethylpiperazine, 2,3-dimethylpiperazine, 1,4-bis(3-aminopropyl)piperazine and N-aminoethylpiperazine; isophoronediamine; polyoxypropylenediamine; bis(4-amino-3-methyldicyclohexyl)methane; diaminodicyclohexylmethane; bis(aminomethyl)cyclohexane; m-xylylenediamine; alpha-(m-aminophenyl)ethylamine; alpha-(p-aminophenyl)ethylamine; metaphenylenediamine; diaminodiphenylmethane; diaminodiphenylsulfone; norbornenediamine; inclusive of conventional aliphatic, alicyclic, and aromatic amines.

The polyamine is generally used in the second reaction stage as reactant. When the polyamine is liquid, such as the liquid diamine ETHACURE^{®} 100, it can be used as diluent, or both as reactant and diluent.

The amount of polyamine used in the second reaction stage can vary in a wide range. It will have an effect on the viscosity of the polymer. In general, the more amine is used, the lower the viscosity of the amine.

A number of experimental examples of both the first reaction stage and the second reaction stage are provided herein after.

### EXPERIMENTAL EXAMPLES

**First Reaction Stage:** Production of carboxylic acid-terminated caprolactone polymers using a polycarboxylic acid to ring open epsilon-caprolactone monomers.
1) Preparation of 1000MWt carboxylic acid-terminated caprolactone polymer from ε-caprolactone monomer using succinic acid as an initiator and p-TsOH as the reaction catalyst.
   a) 15,874.38g of ε-caprolactone monomer mixed with 2,125.62g of succinic acid and the vacuum sparged at 80°C for an hour to remove water from the mix.
   b) The mixture was then heated to 160°C.
   c) Then over a period of 30 minutes 90g of catalyst was added to the mixture.
   d) 2 hours after the beginning of the reaction the mixture is vacuum sparged at 160°C to remove water from the mixture.

   Analysis of the produced carboxylic acid-terminated caprolactone polymer by Acid Value showed the MWt of the product to be 970.
2) Preparation of 2000MWt carboxylic acid-terminated caprolactone polymer from ε-caprolactone monomer using citric acid as an initiator and as the reaction catalyst.
   a) 1,891.26g of citric acid added to 16,108.74g of ε-caprolactone monomer at 80°C.
   b) The mixture was heated to 120°C for 4 hours.

   Analysis of the produced carboxylic acid-terminated caprolactone polymer by Acid Value showed the MWt of the product to be 1795.
3) Preparation of 2000MWt carboxylic acid-terminated caprolactone polymer from ε-caprolactone monomer using adipic acid as an initiator and p-TsOH as the reaction catalyst.
   a) 4,126g of ε-caprolactone monomer mixed with 372.7g of adipic acid at
      80°C under vacuum for 1.5 hours to remove water.
   b) Mixture heated to 180°C (at atmospheric pressure) and the catalyst was added.
   c) After 68 hours only 1.04% of the original monomer remained unreacted.

   Analysis of the produced carboxylic acid-terminated caprolactone polymer by Acid Value showed the MWt of the product to be 1778.

**Second Reaction Stage:** Production of primary amine-terminated caprolactone polymers by reacting a polyamine with a carboxylic acid-terminated caprolactone polymer.
1) Production of 2000MWt amine-terminated caprolactone polymer by mixing a carboxylic acid-terminated caprolactone polymer - as produced by the first reaction stage shown in example 3) - with HMDA (a diamine).
   a) 117.5g of HMDA (1.013 mole) melted at 50°C.
   b) 882.5g of carboxylic acid-terminated caprolactone polymer is heated to 80°C and then added to the HMDA in 4 batches of about 220g over a period of 1 hour. Heated polyol is added periodically to prevent the temperature of the HMDA being increased over 80°C.
   c) The reaction mix was then vacuum sparged at 60°C for 1 hour and then at 80°C for a further 1.5 hours to remove water.

   The total amine content of the resultant reaction mix was analysed by titrating against 0.1M perchloric acid until the methyl violet turns from violet to blue. Results of the analysis showed that the actual primary amine content of the reaction mix was greater that the calculated theoretical primary amine content which suggested the presence of unreacted diamine in the reaction mix.
2) Production of 1000MWt amine-terminated caprolactone polymer by mixing carboxylic acid-terminated caprolactone polymer with HMDA (a diamine).
   a) 191.75g of HMDA melted at 50°C to make it molten.
   b) 819.6g of carboxylic acid-terminated caprolactone polymer heated to 80°C and then gradually mixed into HMDA over a period of 1.5 hours.
   c) The reaction mix was then vacuum sparged at 120°C for 1 hour to remove water.

   The total primary amine content of the reaction mix, as measured by titration against perchloric acid, was found to by less than half that of the theoretical amine content. This suggests the occurrence of a reaction between the internal esters groups and the terminal primary amine groups, which was probably due to the temperature increases during the process of the reaction.
3) Preparation of 1kg of 1000MWt amine-terminated caprolactone polymer using the method as above but with more strictly controlled conditions.
   a) 191.75g of HMDA melted at 50°C to make it molten.
   b) 819.6g of carboxylic acid-terminated caprolactone polymer heated to 80°C and then admixed to HMDA in 4 batches of about 200g over a period of
      2 hours.
   c) Then the mixture was heated to 70°C for a further hour to ensure complete amine addition.
   d) The reaction mix was then vacuum sparged with N2 at 70°C for 1.75 hours, although the vacuum pressure was reduced from an initial pressure of 130mBar to 30mBar and then to 16mBar in an attempt to reduce the occurrence of frothing in the reaction mix.

   Analysis of the reaction product using infra-red spectroscopy revealed presence of peaks relating to primary amines but an absence of peaks relating to diamines.
   Analysis of the melting range of the reaction product was noted to be similar to that of other caprolactone polymers.
   Analysis of the amine content using the above mentioned titration method suggested that majority of diamine had reacted during experiment.
4) Preparation of 2.5kg of 1000MWt amine-terminated caprolactone polymer repeating the conditions of the previous method, but on a slightly larger scale.
   a) 500g of HMDA heated to 50°C.
   b) 2107g of carboxylic acid-terminated caprolactone polymer heated to 80°C and then admixed to HMDA sequentially over a period of 4 hours.
   c) The reaction mix then vacuum sparged at 84°C for 1.5 hours. Analysis of the product of the above experiment provided similar results to those collected from the previous method.
5) Preparation of 1kg of 2000MWt amine-terminated caprolactone polymer by mixing a carboxylic acid-terminated caprolactone polymer - as produced by the first reaction stage shown in example 2) - with HMDA (a diamine).
   a) 154.6g of HDMA heated to 50°C.
   b) 845.4g of carboxylic acid-terminated caprolactone polymer is heated to 80°C and then added to HMDA in 3 batches of about 280g over a period of about an hour.
   c) The reaction mix was then vacuum sparged at 72°C.

   Analysis of the product indicated a completed reaction, although difficulties with the sparging equipment left residual moisture in the mix.

## Claims

1. A method for the preparation of an amine-terminated caprolactone polymer having at least two terminal ends with a primary amine located thereon, comprising the steps of:
a) using a polycarboxylic acid as an initiator in the ring opening polymerisation of epsilon-caprolactone to produce a polycaprolactone polymer having at least two terminal ends with a carboxylic acid located thereon; and then
b) reacting the product of step a) with a polyamine at a temperature above 50°C to produce an amine-terminated polycaprolactone polymer.

2. The method of claim 1, wherein the reaction of step b) is carried out at temperature below 80°C.

3. The method of claim 1 or 2, wherein the polyamine used in step b) is a diamine.

4. The method of claim 1, 2 or 3, wherein the polycarboxylic acid used in step a) is a dicarboxylic acid.

5. The method of any of the preceding claims, wherein the polyamine used in step b) is selected from the group consisting of: Hexamethylenediamine (HMDA); ethylenediamine; N,N'-dimethylethyenediamine; piperazine and piperazine derivatives such as 2-methylpiperazine, 2,5-dimethylpiperazine, 2,3-dimethylpiperazine, 1,4-bis(3-aminopropyl)piperazine and N-aminoethylpiperazine; isophoronediamine; polyoxypropylenediamine; bis(4-amino-3-methyldicyclohexyl)methane; diaminodicyclohexylmethane; bis(aminomethyl)cyclohexane; m-xylylenediamine; alpha-(m-aminophenyl)ethylamine; alpha-(p-aminophenyl)ethylamine; metaphenylenediamine; diaminodiphenylmethane; diaminodiphenylsulfone; norbornenediamine; and also including conventional aliphatic, alicyclic, and aromatic amines.

6. The method of any of the preceding claims, wherein the polycarboxylic acid used in step a) is selected from the group consisting of: adipic acid; succinic acid; dodecanedioic acid; and citric acid.

7. The method of any of the preceding claims, wherein step a) further involves an acid catalyst.

8. The method of claim 7, wherein the acid catalyst is an organic acid such as p-Tolunesulphonic acid.

9. The method of claim 7, wherein the role of acid catalyst is provided by the polycarboxylic acid initiator.

10. The method of any of the preceding claims, wherein the ratio of monomer/initiator/catalyst used in step a) is 4269:731:5.

11. The method of any one of claims 1 to 9, wherein the ratio of monomer/initiator/catalyst used in step a) is 4126:373:5

12. The use of an amine-terminated caprolactone polymer produced by the method of any of claims 1 to 11 as a epoxy resin curative.

13. The use of an amine-terminated caprolactone polymer produced by the method of any of claims 1 to 11 in the production of polyurea.

14. The use of claim 13, wherein the caprolactone polymer is reacted with isocyanate to produce a polyurea polymer.

15. An amine-terminated caprolactone polymer having the general formula :
H₂N-(CH₂)₆-NH-CO-(CH₂)₅O-[C(=O)-(CH₂)₅-O]ₙ-C(=O)-R₁-C(=O)-[O-(CH₂)₅-C(=O)]ₘ-O-(CH₂)₅ CO-NH-(CH₂)₆-NH₂
Wherein R₁ = (CH₂)ₚR₂;
R₂ = CH₂ or CH-(CH₂)_{q}-C(=O)-[O-(CH₂)₅-C(=O)]ₛ-NH-(CH₂)₆-NH₂
m is a whole number between 0 and 500;
n is a whole number between 0 and 500;
wherein m + n is >/= 3;
s is a whole number between 0 and 500;
p is a whole number between 0 and 100; and
q is a whole number between 0 and 100.

16. The caprolactone polymer of claim 15, wherein p is 3.

17. The caprolactone polymer of claim 15 or 16, wherein n is </= 20.

18. The caprolactone polymer of any of claims 15 to 17, wherein m is </= 20.

19. The caprolactone polymer of any of claims 15 to 18, wherein m + n is </= 20.

20. The use of an amine-terminated caprolactone polymer according to any of claims 15 to 19 as an epoxy resin curative.

21. The use of an amine-terminated caprolactone polymer according to any of claims 15 to 19 in the production of polyureas.

22. The use of claim 19, wherein the caprolactone polymer is reacted with isocyanate to produce a polyurea polymer.

## Patentansprüche

1. Verfahren zur Herstellung eines aminterminierten Caprolactonpolymers mit mindestens zwei terminalen Enden mit einem daran befindlichen primären Amin, bei dem man:
a) eine Polycarbonsäure als Initiator bei der ringöffnenden Polymerisation von epsilon-Caprolacton zu einem Polycaprolactonpolymer mit mindestens zwei terminalen Enden mit einer daran befindlichen Carbonsäure verwendet und dann
b) das Produkt aus Schritt a) bei einer Temperatur über 50°C mit einem Polyamin zu einem aminterminierten Polycaprolactonpolymer umsetzt.

2. Verfahren nach Anspruch 1, bei dem man die Umsetzung von Schritt b) bei einer Temperatur unter 80°C durchführt.

3. Verfahren nach Anspruch 1 oder 2, bei dem man als Polyamin in Schritt b) ein Diamin verwendet.

4. Verfahren nach Anspruch 1, 2 oder 3, bei dem man als Polycarbonsäure in Schritt a) eine Dicarbonsäure verwendet.

5. Verfahren nach einem der vorhergehenden Ansprüche, bei dem man das in Schritt b) verwendete Polyamin aus der Gruppe bestehend aus Hexamethylendiamin (HMDA); Ethylendiamin; N,N'-Dimethylethylendiamin; Piperazin und Piperazinderivaten wie 2-Methylpiperazin, 2,5-Dimethylpiperazin, 2,3-Dimethylpiperazin, 1,4-Bis(3-aminopropyl)piperazin und N-Aminoethylpiperazin; Isophorondiamin; Polyoxypropylendiamin; Bis(4-amino-3-methyldicyclohexyl)methan; Diaminodicyclohexylmethan; Bis(aminomethyl)cyclohexan; m-Xylylendiamin; alpha-(m-Aminophenyl)ethylamin; alpha-(p-Aminophenyl)ethylamin; meta-Phenylendiamin; Diaminodiphenylmethan; Diaminodiphenylsulfon; Norbornendiamin sowie herkömmlichen aliphatischen, alicyclischen und aromatischen Aminen auswählt.

6. Verfahren nach einem der vorhergehenden Ansprüche, bei dem man die in Schritt a) verwendete Polycarbonsäure aus der Gruppe bestehend aus Adipinsäure; Bernsteinsäure; Dodecandisäure und Citronensäure auswählt.

7. Verfahren nach einem der vorhergehenden Ansprüche, bei dem man in Schritt a) ferner einen sauren Katalysator verwendet.

8. Verfahren nach Anspruch 7, bei dem es sich bei dem sauren Katalysator um eine organische Säure wie p-Toluolsulfonsäure handelt.

9. Verfahren nach Anspruch 7, bei dem der Polycarbonsäure-Initiator die Rolle des sauren Katalysators übernimmt.

10. Verfahren nach einem der vorhergehenden Ansprüche, bei dem das in Schritt a) verwendete Monomer/Initiator/Katalysator-Verhältnis 4269:731:5 beträgt.

11. Verfahren nach einem der Ansprüche 1 bis 9, bei dem das in Schritt a) verwendete Monomer/Initiator/Katalysator-Verhältnis 4126:373:5 beträgt.

12. Verwendung eines nach dem Verfahren nach einem der Ansprüche 1 bis 11 hergestellten aminterminierten Caprolactonpolymers als Epoxidharz-Härter.

13. Verwendung eines nach dem Verfahren nach einem der Ansprüche 1 bis 11 hergestellten aminterminierten Caprolactonpolymers bei der Herstellung von Polyharnstoff.

14. Verwendung nach Anspruch 13, bei der man das Caprolactonpolymer mit Isocyanat zu einem Polyharnstoffpolymer umsetzt.

15. Aminterminiertes Caprolactonpolymer der allgemeinen Formel :
H₂N-(CH₂)₆-NH-CO-(CH₂)₅O-[C(=O)-(CH₂)₅-O]ₙ-C(=O)-R₁-C(=O)-[O-(CH₂)₅-C(=O)]ₘ-O-(CH₂)₅CO-NH-(CH₂)₆-NH₂
worin R₁ = (CH₂)ₚR₂;
R₂ = CH₂ oder CH-(CH₂)_{q}-C(=O)-[O-(CH₂)₅-C(=O)]ₛ-NH-(CH₂)₆-NH₂;
m für eine ganze Zahl zwischen 0 und 500 steht;
n für eine ganze Zahl zwischen 0 und 500 steht;
worin m + n >/= 3 ist;
s für eine ganze Zahl zwischen 0 und 500 steht;
p für eine ganze Zahl zwischen 0 und 100 steht und
q für eine ganze Zahl zwischen 0 und 100 steht.

16. Caprolactonpolymer nach Anspruch 15, worin p für 3 steht.

17. Caprolactonpolymer nach Anspruch 15 oder 16, worin n </= 20 ist.

18. Caprolactonpolymer nach einem der Ansprüche 15 bis 17, worin m </= 20 ist.

19. Caprolactonpolymer nach einem der Ansprüche 15 bis 18, worin m + n </= 20 ist.

20. Verwendung eines aminterminierten Caprolactonpolymers nach einem der Ansprüche 15 bis 19 als Epoxidharz-Härter.

21. Verwendung eines aminterminierten Caprolactonpolymers nach einem der Ansprüche 15 bis 19 bei der Herstellung von Polyharnstoffen.

22. Verwendung nach Anspruch 21, bei der man das Caprolactonpolymer mit Isocyanat zu einem Polyharnstoffpolymer umsetzt.

## Revendications

1. Procédé pour la préparation d'un polymère de caprolactone à terminaison amine ayant au moins deux extrémités terminales avec une amine primaire qui y est localisée, comprenant les étapes de :
a) utilisation d'un acide polycarboxylique comme initiateur dans la polymérisation d'ouverture de cycle d'une caprolactone epsilon pour produire un polymère de caprolactone ayant au moins deux extrémités terminales avec un acide carboxylique qui y est localisé; puis alors
b) mise en réaction du produit de l'étape a) avec une polyamine à une température supérieure à 50°C pour produire un polymère de caprolactone à terminaison amine.

2. Procédé selon la revendication 1, dans lequel la réaction de l'étape b) est réalisée à une température inférieure à 80°C.

3. Procédé selon la revendication 1 ou 2, dans lequel la polyamine utilisée dans l'étape b) est une diamine.

4. Procédé selon la revendication 1, 2 ou 3, dans lequel l'acide polycarboxylique utilisé dans l'étape a) est un acide dicarboxylique.

5. Procédé selon l'une quelconque des revendications précédentes, dans lequel la polyamine utilisée dans l'étape b) est choisie parmi le groupe constitué de : l'hexaméthylènediamine (HMDA) ; l'éthylènediamine ; la N,N'-diméthyléthylènediamine ; la pipérazine et les dérivés de pipérazine tels que la 2 méthylpipérazine, la 2,5-diméthylpipérazine, la 2,3-diméthylpipérazine, la 1,4-bis(3-aminopropyl)pipérazine et la N-aminoéthylpipérazine ; l'isophoronediamine ; la polyoxyproplylènediamine ; le bis(4-amino-3-méthyldicyclohexyl)méthane ; le diaminodicyclohexylméthane ; le bis(aminométhyl)cyclohexane ; la m-xylylènediamine ; l'alpha-(m-aminophényl)éthylamine ; l'alpha-(p-aminophényl)éthylamine ; la métaphénylènediamine ; le diaminodiphénylméthane ; la diaminodiphénylsulfone ; la noroborènediamine et comprenant aussi les amines aliphatiques, alicycliques, et aromatiques conventionnelles.

6. Procédé selon l'une quelconque des revendications précédentes, dans lequel l'acide polycarboxylique utilisé dans l'étape a) est choisi parmi le groupe constitué de : l'acide adipique ; l'acide succinique ; l'acide dodécanoïque ; et l'acide citrique.

7. Procédé selon l'une quelconque des revendications précédentes, dans lequel l'étape a) implique de plus un catalyseur acide.

8. Procédé selon la revendication 7, dans lequel le catalyseur acide est un acide organique tel que l'acide p-toluènesulfonique.

9. Procédé selon la revendication 7, dans lequel le rôle de catalyseur acide est procuré par l'initiateur de l'acide polycarboxylique.

10. Procédé selon l'une quelconque des revendications précédentes, dans lequel le rapport du monomère/initiateur/catalyseur utilisé dans l'étape a) est 4269/731/5.

11. Procédé selon l'une quelconque des revendications 1 à 9, dans lequel le rapport du monomère/initiateur/catalyseur utilisé dans l'étape a) est 4126/373/5.

12. Utilisation d'un polymère de caprolactone à terminaison amine produit au moyen du procédé selon l'une quelconque des revendications 1 à 11 comme curateur de résine époxy.

13. Utilisation d'un polymère de caprolactone à terminaison amine produit au moyen du procédé selon l'une quelconque des revendications 1 à 11 dans la production de polyurée.

14. Utilisation selon la revendication 13, dans laquelle le polymère de caprolactone est mis à réagir avec un isocyanate pour produire un polymère de polyurée.

15. Polymère de caprolactone à terminaison amine ayant la formule générale :
H₂N-(CH₂)₆-NH-CO-(CH₂)₅O-[(C(=O)-(CH₂)₅-O]ₙ-C(=O)-R₁-C(=O)-[O-(CH₂)₅-C-=O)]ₘ-O-(CH₂)₅CO-NH-(CH₂)₆-NH₂
dans laquelle R₁ = (CH₂)ₚR₂;
R₂ = CH₂ ou CH-(CH₂)_{q}-C(=O)-[O-(CH₂)₅-C(=O)]₈-NH-(CH₂)₆-NH₂
m est un nombre entier compris entre 0 et 500 ;
n est un nombre entier compris entre 0 et 500 ;
dans laquelle m + n ≥ 3 ;
s est un nombre entier compris entre 0 et 500 ;
p est un nombre entier compris entre 0 et 100 ; et
q est un nombre entier compris entre 0 et 100.

16. Polymère de caprolactone selon la revendication 15, dans laquelle p a la valeur 3.

17. Polymère de caprolactone selon la revendication 15 ou 16, dans lequel n est ≤ 20.

18. Polymère de caprolactone selon l'une quelconque des revendications 15 à 17, dans laquelle m est ≤ 20.

19. Polymère de caprolactone selon l'une quelconque des revendications 15 à 18, dans laquelle m + n est ≤ 20.

20. Utilisation d'un polymère de caprolactone à terminaison amine selon l'une quelconque des revendications 15 à 19 comme curateur de résine époxy.

21. Utilisation d'un polymère de caprolactone à terminaison amine selon l'une quelconque des revendications 15 à 19 dans la production de polyurées.

22. Utilisation selon la revendication 19, dans laquelle le polymère de caprolactone est mis à réagir avec un isocyanate pour produire un polymère de polyurée.
